# EUROPEAN PATENT SPECIFICATION

(11) **EP 0 824 859 B1**
(45) Date of publication and mention of the grant of the patent: **18.10.2000**
(21) Application number: 97306302.7
(22) Date of filing: 19.08.1997
(51) Int. Cl.: A01K 63/00, A47F 11/04, G09F 13/12

(54) **Display tank**
Schaubehälter
Récipient de présentation

(30) Priority: 20.08.1996 GB 9617434
(43) Date of publication of application: 25.02.1998
(73) Proprietor: Boyd, Archibald, Cove G84 0NX, Scotland (GB)
(72) Inventor: Boyd, Archibald, Cove G84 0NX, Scotland (GB)
(74) Representative: Shanks, Andrew

(56) References cited:
- GB-A- 2 217 964
- US-A- 3 606 299
- US-A- 3 610 918
- US-A- 5 000 118

## Description

The present invention relates to a display tank, and more particularly to a display tank comprising a reflective surface or a plurality of reflective surfaces for creating an impression of increased volume within the tank.

Presently, display tanks, for example, fish tanks or aquariums are generally formed from transparent walls fixed to a base with optionally a lid provided on top of the tank. The walls of the tank are typically made from conventional hardened glass or perspex to allow viewing of the inside of the tank.

US 3,706,299 to Hendges describes a mirrored marine aquarium which is constructed of illuminated one-way and two-way glass mirrors to enhance the viewing of the marine life therein. However two-way glass mirrors are much heavier than normal glass and appear very dark when viewed from the light transmissive side. Accordingly, it is considered that aquariums constructed in this manner may not appear pleasing to the eye, would require powerful internal illumination and moreover would be considerably heavier than a conventional aquarium. Tests have also established that conventional two-way glass mirrors deteriorate rapidly when in contact with water, particularly salt water. In particular, the inner coating on the glass corrodes and flakes from the glass, destroying the reflective effect and poisoning any fish in the aquarium. Accordingly, Hendges proposal has not been adopted by manufacturers of aquariums.

US-A-3610918 describes a novelty-type light device comprising a generally hollow body mounted on a support containing a light source. The hollow body is defined by a plurality of panels whereby at least one panel reflects light, at least one panel is semitransparent such that the light source can be viewed through any one of the panels and that the reflection of the light source is seen on one or more of the other panels.

Fishkeepers often desire having large fish tanks containing large numbers and varieties of fish. However, because of lack of space or the impracticalities of keeping such large tanks they may be restricted to keeping smaller tanks.

Furthermore, a fishkeeper may wish to keep many different types of fish within a single tank, together with foliage to improve the tank's appearance. However, this is often undesirable, as certain types of fish cannot be kept together, for example fresh water and salt water fish, or large fish which may eat smaller fish. Moreover, some fish destroy the foliage kept within the tanks, by eating the foliage or pulling it out from the roots.

It is among the objects of the present invention to obviate and/or mitigate at least some of the above disadvantages.

In a first aspect, the present invention provides an aquarium and/or vivarium in the form of a tank comprising a plurality of walls having surfaces which reflect light within the tank, characterised in that at least a portion of one of said walls being of transparent reflecting glass comprising a thin transparent coating of metal oxide(s) to provide a viewing area through which the tank interior may be viewed.

In a second aspect, the present invention provides a display tank comprising a plurality of walls, at least one wall having a surface which reflects light within the tank and an opposing wall formed of a transparent reflecting glass providing a viewing area through which the tank interior may be viewed, characterised in that the transparent reflecting glass comprises a thin transparent coating of metal oxide(s) and that a transparent wall panel is provided between said at least one wall and said opposing wall to divide the tank interior.

Generally, a reflecting surface is provided opposite and/or adjacent to the viewing area.
The display tanks of the present invention find particular application for use as fish tanks, or aquariums. However, display tanks according to the present invention may also be used, for example, as vivariums for keeping animals such as reptiles.

The display tanks may take any desired shape. Preferably the display tank is cuboid, parallelpipoid or cylindrical in shape. Alternatively the tank may be generally triangular in shape to allow for corner positioning.

The viewing area is of reflecting or reflective glass. Conventional reflective glass comprises a sheet of clear or coloured glass, typically float glass, one side of which is covered with a thin transparent coating of metal oxide(s). The coating may be applied by a pyrolytic process as the glass exits the oven. The face of a reflective glass panel covered with the thin transparent coating of metal oxide(s) is more reflective than the other face of the panel and it is preferred that the coated face is positioned on the interior of the tank.

Unlike a two-way mirror, reflective glass is designed to reflect only a portion of the available light and appears similar to clear glass when used in a display tank. Typically, reflective glass allows 15 to 70% of light outside the tank to be transmitted into the tank. Moreover, by positioning the coated side of a reflective glass panel inwards typically 20-40%, and preferably 25-35% of light is reflected within the tank. The reflective glass may be for example STOPSOL™ reflecting glass (available from Glaverbel of Brussels, Belgium) or REFLECTOFLOAT™ and MIRAGE™ reflective glass (available from Pilkington United Kingdom Limited of St Helens, England).

The remaining reflecting surface or surfaces may be a non-transparent conventional silvered glass mirror, or reflective glass (see above) which is preferably orientated such that the more reflective side of the glass faces inwards.

It is preferable to increase the light level within the tank. The increased light may be provided by lights located within a tank lid and/or in a tank base. Increasing the light level within the tank allows a viewer to look into a tank through the reflective glass, but the lower levels of light outside the tank prevent the viewer's image from being seen on the reflective surface(s) of the reflective glass inside the tank.

A display tank may be formed using any desired combination of materials. For example, a tank may comprise a reflective glass front wall panel and silvered mirrored side and back wall panels. Alternatively a tank may be formed wherein all four wall panels comprise reflective glass, so that the tank may be viewed from any position outside the tank, with the inner walls being perceived as mirrors.

A particularly preferred embodiment is a parallelpipoid display tank comprising four substantially vertical walls connected to a base, wherein the front wall panel and two side wall panels are formed from reflective glass and the back wall panel is a silvered mirror. Such a construction creates the impression to a viewer of a tank having an internal volume many times its actual size, as light within the tank is reflected back and forth off the reflective surfaces. When viewing the inside of the tank from the front or sides, the background appears to stretch back to infinity, provided that the water is clear.

Although a viewer may look directly at the silvered mirror back wall, the viewer's image is generally not seen when lower levels of light occur outside the tank with respect to light levels inside the tank. Preferably, the display tank further comprises light means for illuminating the inside of the tank. The light means may for example be an incandescent light source or fluorescent tube lighting provided in the tank base or optionally in a tank lid.

Preferably the display tank is compartmentalised, such that the internal volume of the tank is divided into at least two compartments. Generally this may be achieved using dividing walls of conventional transparent glass, polycarbonate or perspex of any desired shape. The dividing walls may be intricate in shape, for example sigmoidally shaped, or simply linear when viewed from above. Generally the tank is divided using glass dividing walls. The glass dividing walls are preferably sealed to the walls of the tank in a watertight and/or hermetic manner.

Dividing the tank into at least two compartments allows a fishkeeper to place different objects in each of said at least two compartments. For example a tank may be formed comprising two substantially equal sized front and back compartments; the fishkeeper may place fresh-water fish in one and salt-water fish in the other. In a conventional tank it would be immediately evident to a viewer that the salt-water fish and fresh-water fish were separated. However by virtue of the reflective properties of the tanks according to the present invention, not only does it appear to the viewer that there is increased space, but it also appears that the salt-water fish and fresh-water fish are swimming together.

Furthermore pregnant fish may be separated from other fish to allow birth and rearing of the young fry to progress satisfactorily. Sea-horses, for example, may be placed in a separate compartment to allow them to feed properly. Generally marine fish swim faster than sea-horses and consume all the available food. However, in both instances, it appears to the viewer that the fry or sea-horses are swimming amongst the other fish.

Compartmentalisation of the tank may provide a number of further uses. For example different environments may be created in separate compartments to make it appear that fish swimming in their preferred environments are swimming together. Moreover predators may be placed in their own compartment to prevent them from eating the other fish. Diseased fish can also easily be removed to a separate compartment to prevent spread of disease without requiring them to be removed to a separate tank.

Furthermore, plants or live corals may be introduced into compartments separate from the fish. This may be desirable when growing plants requiring a low pH which is not suitable for fish or when keeping fish which would normally destroy the plants or coral. The plants or coral are kept separate from the fish, but appear to the viewer upon looking into the tank as being in the one compartment.

Separate compartments may also be created within the tank using reflecting panels, such that the area behind the panel is not visible to a viewer. This allows pumps, heaters and other apparatus to be located within the confines of the tank, while the reflecting surface disguises the presence of the "hidden" compartment. The reflecting panel may be arranged to provide communication with the remainder of the tank to permit, for example, passage of water into and from the compartment.

A novelty tank may be provided with separate wet and dry compartments, the wet compartment being designed to house fish and the like, whereas the dry compartment can be used to house animals, such as reptiles and so forth. When a viewer looks into the tank, it appears that the animals/reptiles are amongst the fish and the viewer is deceived into thinking that the animals/reptiles are living underwater.

Separate tanks may be placed adjacent to one another with reflective glass being utilised on the outermost walls. This may be as an alternative or in addition to compartmentalisation of a single tank. The separate tanks appear by reflection to be a single tank.

Embodiments of the present invention will now be further described by way of example with reference to the following drawings in which:
Figure 1 shows a perspective view of an embodiment of a display tank according to the present invention;
Figure 2 shows an isometric view of a further embodiment of a display tank according to the present invention;
Figure 3 shows a plan view of another embodiment of a display tank according to the present invention; and
Figures 4a to 4f show plan views of further embodiments of display tanks according to the present invention.

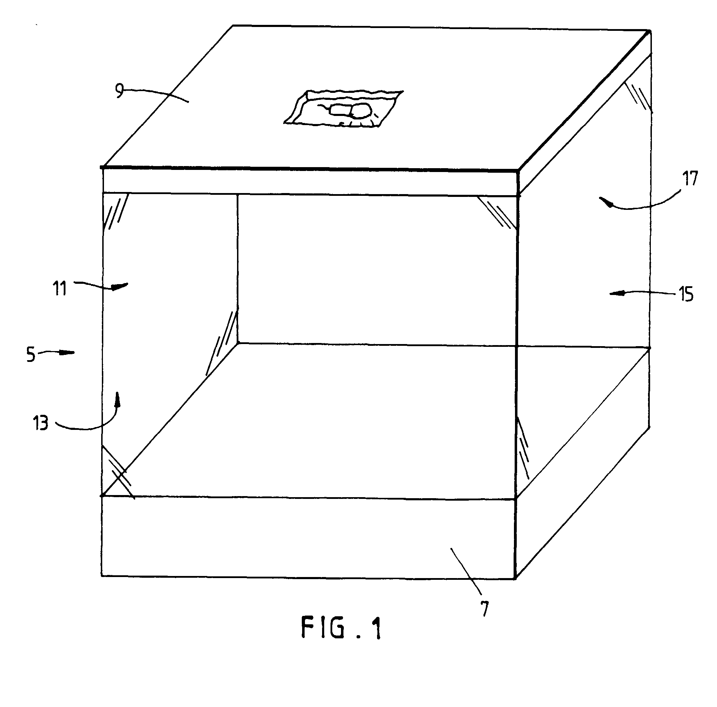

Figure 1 shows a display tank 5 for use as a fish tank. The display tank 5 has four walls: a front wall 11, two side walls 13, 15 and a back wall 17, and a base 7. Adjacent edges of the walls 11, 13, 15, 17 are sealed to each other and the walls 11, 13, 15, 17 sealed to the base 7, all seals being watertight. The tank 5 is covered by a lid 9. Lights are provided within the base 7 and lid 9 to illuminate the inside of the tank 5.

The front wall 11 and side walls 13, 15 are formed from STOPSOL™ reflecting glass (available from Glaverbel of Brussels, Belgium) with the coated side of the glass on the inside of the tank. The rear wall 17 is a conventional silvered mirror. A viewer looks inside the tank 5 through the front wall 11 or side walls 13, 15. The viewer is given the impression of a tank with internal dimensions many times the size of the actual tank. This is by virtue of light within the tank being reflected off the reflective surfaces of the glass front wall 11 and side walls 13, 15 and the silvered mirror back wall 17. Due to reflection within the tank 5, objects such as fish, plants, ornaments and the like are reproduced at different angles when viewing the tank 5 through the front wall 11 or side walls 13, 15. When viewing a conventional fish tank from the front, fish may swim behind rocks or plants and be obscured from view. However, in the present display tank 5 the reflected image of a fish "hidden" behind a rock or plant may be viewed.

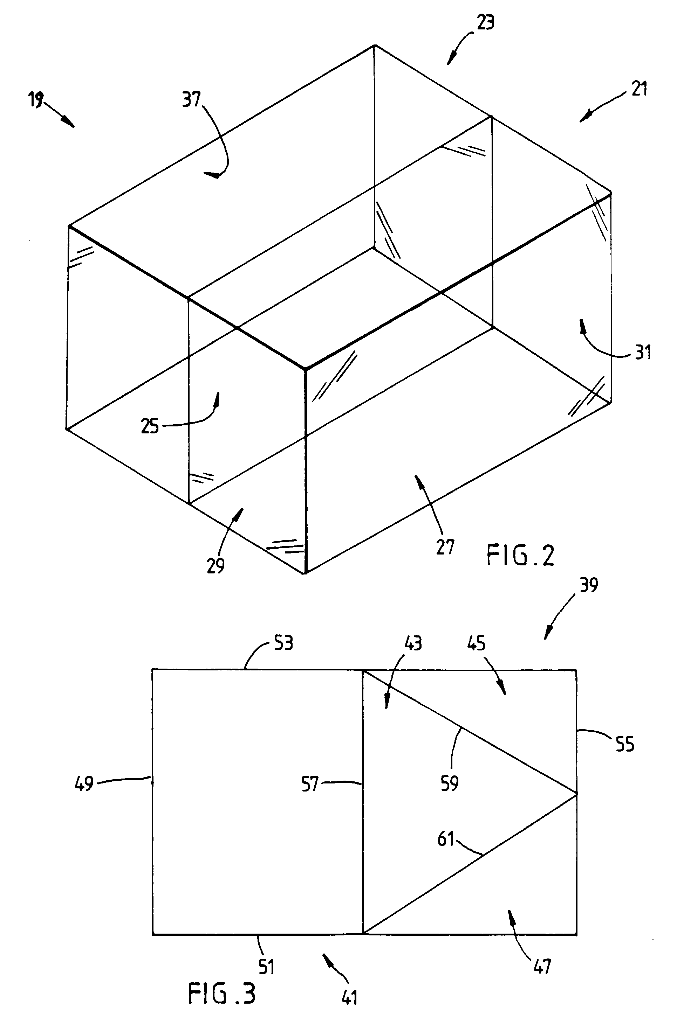

Figure 2 shows a display tank 19 comprising a front compartment 21 and rear compartment 23 separated by a dividing wall 25. A front wall 27 and side walls 29, 31 of the tank are formed from Stopsol reflecting glass with the reflective surface on the inside of the tank. The dividing wall 25 is conventional transparent glass and the rear wall 37 is a silvered mirror. All of the walls 25, 27, 29, 31 and 37 are watertightly sealed to each other and to a base (not shown).

This tank allows fish which could not otherwise live together within a single tank, for example salt water fish and fresh water fish, to appear to be swimming freely within a single tank, even though the incompatible fish are kept within the separate compartments 21, 23. The viewer generally views the tank through the front wall 27 towards the silvered mirror wall 37. Light within the tank, provided by lights within the tank base and/or tank lid (not shown), illuminates the inside of the tank and reflects from the surfaces of the walls 27, 31, 29 and 37 perceivably multiplying the inner dimensions of the tank. The viewer does not generally see the dividing wall 25 and by virtue of the light reflection it appears to the viewer that the salt water and fresh water fish are swimming together.

Such a tank may also be used to separate larger fish from smaller fish, when the larger fish would otherwise eat the smaller fish, the larger fish being placed in for example the front compartment 21 and the smaller fish in the rear compartment 23. This creates the impression to a viewer looking into the tank through the front wall 27 that the large and small fish are swimming together in a single tank.

Moreover, such a tank may be used for novelty purposes by allowing fish to be placed in for example the front compartment and animals such as hamsters in the rear compartment 23. This creates the impression to a viewer looking into the tank through the front wall 27 that the animals are underwater and living with the fish.

Different environments may also be provided in the two compartments 21, 23 for example, containing water of different pH so that fish requiring water of a particular pH in their respective compartments appear to be swimming within a single tank.

Figure 3 shows a display tank 39 comprising a front compartment 41 and rear compartments 43, 45 and 47. A front wall 49 and side walls 51, 53 of the tank 39 are formed of Stopsol reflecting glass and a rear wall 55 is a silvered mirror. Separating walls 57, 59 and 61 are of conventional glass.

Incompatible fish may be placed in compartments 41 and 43 and plants in compartments 45 and 47. A viewer looking through the front wall 49 towards the rear wall 55 is given the impression that the incompatible fish are swimming together in amongst the plants.

Alternatively, separating walls 59 and 61 may be of reflecting glass or a one-way reflecting panel formed of a water resistant material such as Reflex™ (available from Pilkington UK Limited). This creates the impression to a viewer of a corridor appearing around the tank reflection. Also, apparatus, such as pumps, may be concealed within the compartments 45, 47, which may be in fluid communication with the other compartments 41, 43.

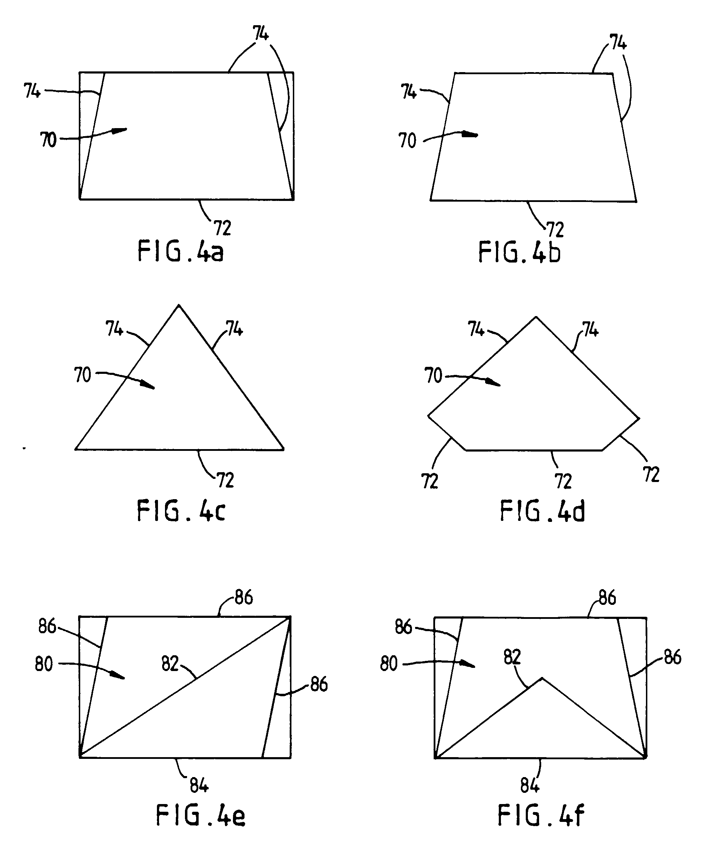

Figures 4a - 4f show further embodiments of display tanks according to the present invention. Figures 4a - 4d show single compartment display tanks 70 which have a front wall 72 of Stopsol reflecting glass and side/rear walls 74 of silvered mirrors. Figures 4e and 4f show compartmentalised display tanks 80 which are separated into compartments by a dividing wall 82. The front walls of the display tanks 80 are formed of reflecting glass and the side/rear walls 86 are formed of a silvered mirrors.

## Claims

1. An aquarium and/or vivarium in the form of a tank (5) comprising a plurality of walls (11, 13, 15, 17) having surfaces which reflect light within the tank, characterised in that at least a portion of one of said walls being of transparent reflecting glass comprising a thin transparent coating of metal oxide(s) to provide a viewing area through which the tank interior may be viewed.

2. The aquarium and/or vivarium (5) according to claim 1 wherein the transparent reflecting glass allows 15 to 70% of light outside the tank to be transmitted into the tank interior.

3. The aquarium and/or vivarium (5) according to claim 1 or 2 wherein the reflecting glass walls (11, 13, 15, 17) reflect 20 - 40% of light within the tank.

4. The aquarium and/or vivarium (5) according to claim 1, 2 or 3 further comprising light means for illuminating the tank interior.

5. The aquarium and/or vivarium (5) according to any of claims claim 1 to 4 comprising four substantially vertical walls (11, 13, 15, 17) connected to a base (7), wherein a front wall (11) and two side walls (13, 15) are of reflective glass and a back wall (17) is a silvered mirror.

6. The aquarium and/or vivarium (19) according to any of the preceding claims internally divided into at least two compartments (21,23).

7. The aquarium and/or vivarium (19) according to claim 6 wherein the tank is divided into said at least two compartments (21,23) by a transparent dividing wall panel (25).

8. The aquarium and/or vivarium (19) according to claim 7 wherein the dividing wall panel (25) is interposed between a wall (27) of transparent reflecting glass and an opposing light reflecting wall (37).

9. The aquarium and/or vivarium (19) according to claim 6 wherein the tank is divided into said at least two compartments (21,23) by a further light reflecting wall (25).

10. A display tank (19) comprising a plurality of walls (27,29,31,37), at least one wall (37) having a surface which reflects light within the tank and an opposing wall (27) formed of a transparent reflecting glass providing a viewing area through which the tank interior may be viewed, characterised in that the transparent reflecting glass comprises a thin transparent coating of metal oxide(s) and that a transparent wall panel (25) being provided between said at least one wall and said opposing wall to divide the tank interior.

## Patentansprüche

1. Aquarium und/oder Vivarium in Form eines Behälters (5) mit mehreren Wänden (11, 13, 15, 17), deren Oberflächen Licht innerhalb des Behälters reflektieren, dadurch gekennzeichnet, daß zumindest ein Teil einer der Wände aus einem durchsichtigen reflektierenden Glas mit einer dünnen durchsichtigen Schicht aus Metalloxid(en) besteht, um eine Sichtfläche zu bilden, durch die das Innere des Behälters betrachtet werden kann.

2. Aquarium und/oder Vivarium (5) nach Anspruch 1, wobei das durchsichtige reflektierende Glas 15 bis 70% des Lichts außerhalb des Behälters in das Innere des Behälters durchläßt.

3. Aquarium und/oder Vivarium (5) nach Anspruch 1 oder 2, wobei die reflektierenden Glaswände (11, 13, 15, 17) 20 - 40% des Lichts innerhalb des Behälters reflektieren.

4. Aquarium und/oder Vivarium (5) nach Anspruch 1, 2 oder 3, das ferner eine Beleuchtungseinrichtung zum Beleuchten des Inneren des Behälters aufweist.

5. Aquarium und/oder Vivarium (5) nach einem der Ansprüche 1 bis 4, das vier im wesentlichen vertikale Wände (11, 13, 15, 17) aufweist, die mit einer Grundplatte (7) verbunden sind, wobei eine Vorderwand (11) und zwei Seitenwände (13, 15) aus reflektierendem Glas bestehen und eine Rückwand (17) ein Silberspiegel ist.

6. Aquarium und/oder Vivarium (19) nach einem der vorstehenden Ansprüche, das innen in mindestens zwei Kammern (21, 23) unterteilt ist.

7. Aquarium und/oder Vivarium (19) nach Anspruch 6, wobei der Behälter durch eine durchsichtige Trennwandplatte (25) in die mindestens zwei Kammern (21, 23) unterteilt wird.

8. Aquarium und/oder Vivarium (19) nach Anspruch 7, wobei die Trennwandplatte (25) zwischen einer Wand (27) aus durchsichtigem reflektierendem Glas und einer gegenüberliegenden lichtreflektierenden Wand (37) eingesetzt ist.

9. Aquarium und/oder Vivarium (19) nach Anspruch 6, wobei der Behälter durch eine weitere lichtreflektierende Wand (25) in die mindestens zwei Kammern (21, 23) unterteilt wird.

10. Schaubehälter (19) mit mehreren Wänden (27, 29, 31, 37), wobei mindestens eine Wand (37) eine Oberfläche aufweist, die Licht innerhalb des Behälters reflektiert, und eine gegenüberliegende Wand (27) aus einem durchsichtigen reflektierenden Glas besteht und eine Sichtfläche bildet, durch die das Innere des Behälters betrachtet werden kann, dadurch gekennzeichnet, daß das durchsichtige reflektierende Glas eine dünne durchsichtige Schicht aus Metalloxid(en) aufweist, und daß eine durchsichtige Wandplatte (25) zwischen mindestens einer Wand und der gegenüberliegenden Wand zur Unterteilung des Behälterinneren vorgesehen ist.

## Revendications

1. Aquarium et/ou vivarium sous la forme d'un bac (5) comprenant une pluralité de parois (11, 13, 15, 17) possédant des surfaces qui réfléchissent la lumière à l'intérieur du bac, caractérisé en ce qu'au moins une partie d'une desdites parois est constituée de verre réfléchissant transparent comprenant une couche mince transparente de revêtement en oxyde(s) métallique(s) afin de produire une zone de visualisation à travers laquelle on peut voir l'intérieur du bac.

2. Aquarium et/ou vivarium (5) selon la revendication 1, dans lequel le verre réfléchissant transparent permet de transmettre 15 à 70% de la lumière extérieure au bac dans l'intérieur du bac.

3. Aquarium et/ou vivarium (5) selon la revendication 1 ou 2, dans lequel les parois en verre réfléchissant (11, 13, 15, 17) réfléchissent 20 à 40% de la lumière à l'intérieur du bac.

4. Aquarium et/ou vivarium (5) selon la revendication 1, 2 ou 3, comprenant en outre un moyen d'éclairage destiné à éclairer l'intérieur du bac.

5. Aquarium et/ou vivarium (5) selon l'une quelconque des revendications 1 à 4, comprenant quatre parois sensiblement verticales (11, 13, 15, 17) reliées à un socle (7), dans lequel une paroi frontale (11) et deux parois latérales (13, 15) sont en verre réfléchissant, et une paroi arrière (17) est un miroir argenté.

6. Aquarium et/ou vivarium (19) selon l'une quelconque des revendications précédentes, divisé à l'intérieur en au moins deux compartiments (21, 23).

7. Aquarium et/ou vivarium (19) selon la revendication 6, dans lequel le bac est divisé en lesdits au moins deux compartiments (21, 23) par un panneau formant paroi de séparation transparente (25).

8. Aquarium et/ou vivarium (19) selon la revendication 7, dans lequel le panneau formant paroi de séparation (25) est intercalé entre une paroi (27) en verre réfléchissant transparent et une paroi réfléchissant la lumière opposée (37).

9. Aquarium et/ou vivarium (19) selon la revendication 6, dans lequel le bac est divisé en lesdits au moins deux compartiments (21, 23) par une autre paroi réfléchissant la lumière (25).

10. Bac de présentation (19) comprenant une pluralité de parois (27, 29, 31, 37), au moins une paroi (37) possédant une surface qui réfléchit la lumière à l'intérieur du bac et une paroi opposée (27) constituée d'un verre réfléchissant transparent produisant une zone de visualisation à travers laquelle on peut voir l'intérieur du bac, caractérisé en ce que le verre réfléchissant transparent comprend une couche mince transparente de revêtement en oxyde(s) métallique(s), et en ce qu'un panneau formant paroi transparente (25) est disposé entre ladite au moins paroi et ladite paroi opposée, afin de diviser l'intérieur du bac.
